# EUROPEAN PATENT SPECIFICATION

(11) **EP 2 077 221 B1**
(45) Date of publication and mention of the grant of the patent: **16.10.2013**
(21) Application number: 08254122.8
(22) Date of filing: 23.12.2008
(51) Int. Cl.: B62J 17/06

(54) **Straddle-type vehicle**
Grätschsitz-Fahrzeug
Véhicule de type à enfourcher

(30) Priority: 28.12.2007 JP 2007338782
(43) Date of publication of application: 08.07.2009
(73) Proprietor: Yamaha Hatsudoki Kabushiki Kaisha, Shizuoka-ken Shizuoka 438-8501 (JP)
(72) Inventor: Miyazaki, Takaaki, Iwata-shi Shizuoka-ken 438-8501 (JP)
(74) Representative: Moreland, David

(56) References cited:
- JP-A- 58 056 978
- JP-A- 2005 178 621
- JP-U- 59 080 182
- US-A1- 2007 034 429

## Description

### FIELD OF THE INVENTION

The present invention relates to a straddle-type vehicle and particularly relates to an under cowl of a straddle-type vehicle.

### BACKGROUND TO THE INVENTION

Straddle-type vehicles are known which include a cowl or cowling for reducing air resistance during running. Examples of such a cowl include an under cowl which covers peripheries of a cylinder block or a cylinder head of an engine. For example, Japanese Examined Patent Publication No. 3-62590 discloses an under cowl configured so that a lower connection fin passing transversely across front sides of lower portions of a crankcase and an exhaust pipe is installed in lower portions of a pair of left and right side panel portions. More specifically, the side panel portions are bilaterally symmetric and a cooling air introduction port serving as a front opening portion that is open to a front surface of an engine is formed between front ends of the side panel portions. A lower portion of the front end of each side panel portion extends toward a front side of a lower portion of the exhaust pipe led out from front surfaces of the crankcase and the cylinder head of the engine. The lower connection fin is provided to be installed between front ends of the extension portions.

Document JP 580 56978, which discloses all the features of the preamble of claim 1, is considered to be the closest prior art.

It is desirable in the art to improve rigidity of an under cowl capably withstand air resistance during running.

It is also desirable to contrive a shape of the under cowl so as to be able to introduce flowing air into the engine with high efficiency.

### SUMMARY OF THE INVENTION

Aspects of the invention are defined by the independent claims. Various preferred features are defined by the dependent claims.

Described herein is a straddle-type vehicle comprising:
an engine;
a body frame; and
an under cowl including:
   a left side member covering at least a part of the left side of the engine;
   a right side member covering at least a part of the right side of the engine; and
   a front side member attached to the body frame and extending transversely of the body frame to connect the left side member with the right side member.

The under cowl may cover both side portions of the engine when viewed from a front side of the straddle-type vehicle.

The under cowl may cover a front side portion of the engine when viewed from a lateral side of the straddle-type vehicle.

The straddle-type vehicle may comprise a stay attached to the body frame and supporting upper portions of the left side member and the right side member. The stay may be attached to the body frame above the front side member.

A lower portion of each of the left side member and the right side member may be attached to a bracket attached to the body frame.

The front side member may includes:
a rib extending forward and downward from a region attached to the body frame; and
a first winged portion extending transversely from a tip end of the rib in a width direction.

The first winged portion may be connected to the left side member and the right side member.

Left and right side surfaces of the rib may incline outwardly to the left and the right in a width direction from the tip end of the rib.

The straddle-type vehicle may comprise a second winged portion extending transversely from a proximal end portion of the rib.

The second winged portion may be connected to the left side member and/or the right side member.

A gap allowing an exhaust pipe connected to the engine to pass through may be formed in the front side member.

The front side member may extend transversely on a front side of the body frame.

Also described herein is an under cowl for a straddle-type vehicle comprising:
a left side member adapted to cover at least a part of a left side of an engine;
a right side member adapted to cover at least a part of a right side of an engine; and
a front side member connecting the left side member with the right side member, wherein the front side member is adapted to be attached to a vehicle body frame and to extend transversely of the body frame.

A straddle-type vehicle described herein includes an under cowl covering up both left and right sides of an engine attached to a lower portion of a body frame. The under cowl includes a left side member covering up at least a part of the left side of the engine and a right side member covering up at least a part of the right side of the engine. The under cowl also includes a front side member attached to the body frame, extending transversely on a front side of the body frame, and connecting the left side member with the right side member.

An under cowl described herein includes the front side member attached to the body frame, extending transversely on the front side of the body frame, and connecting the left side member with the right side member. Therefore, rigidity of the under cowl can be improved.

### BRIEF DESCRIPTION OF THE DRAWINGS

These and other aspects of the present invention will now be described, by way of example only, with reference to the accompanying drawings, in which:
Fig. 1 is a side view of a straddle-type vehicle according to one embodiment of the present invention;
Fig. 2 is a side view showing a state in which an under cowl is detached from the straddle-type vehicle according to one embodiment of the present invention;
Fig. 3 is a perspective view showing the under cowl of the straddle-type vehicle according to one embodiment of the present invention;
Fig. 4 is a side view showing a left side member of the under cowl of the straddle-type vehicle according to one embodiment of the present invention;
Fig. 5 is a front view showing a state in which the under cowl of the straddle-type vehicle according to one embodiment of the present invention is attached to a body frame;
Fig. 6 is a side view showing a right side member of the under cowl of the straddle-type vehicle according to one embodiment of the present invention; and
Fig. 7 is a front view showing a front side member of the under cowl of the straddle-type vehicle according to one embodiment of the present invention.

### DETAILED DESCRIPTION OF THE DRAWINGS

A straddle-type vehicle according to one embodiment of the present invention will be described hereinafter with reference to the drawings. In the drawings, members or regions exhibiting the same functions are denoted by the same reference symbols, respectively. Further, the present invention is not limited to the following embodiment. Moreover, if expressions such as "front", "rear", "left", "right", "upper", and "lower" are used when referring to the straddle-type vehicle, they are according to directions as seen from a rider in a state in which the rider rides on the straddle-type vehicle in an ordinary riding posture, respectively. Furthermore, a front side of the vehicle is denoted by "Fr", a rear side thereof is denoted by "Rr", a left side thereof is denoted by "L", and a right side thereof is denoted by "R" as necessary. Each drawing is shown on premise that the drawing is seen in a direction of reference symbols.

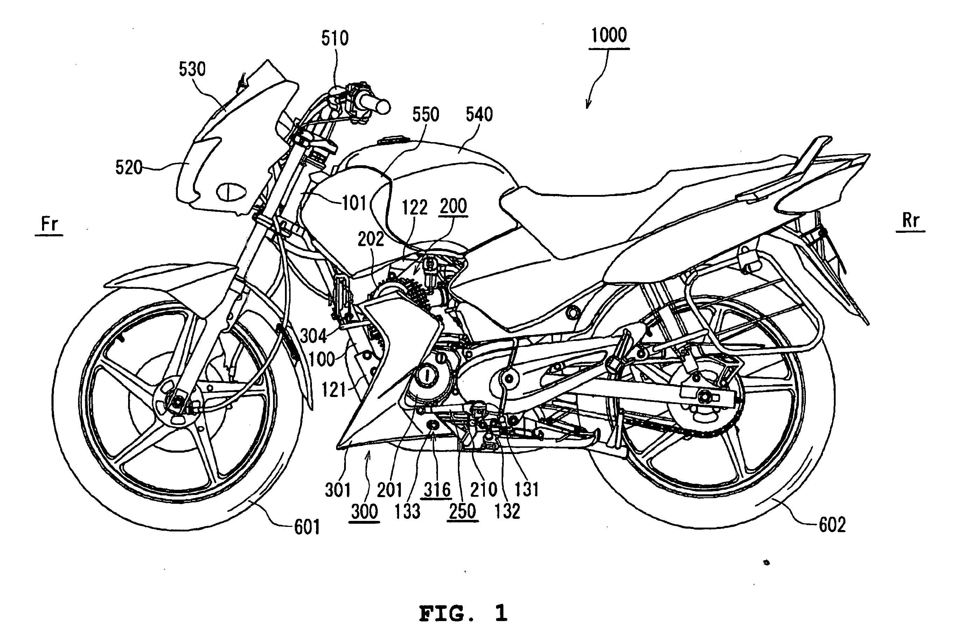

As shown in Fig. 1, a straddle-type vehicle 1000 according to one embodiment of the present invention includes an under cowl 300 covering both left and right sides of an engine 200 attached to a body frame 100. More specifically, in this embodiment, as shown in Fig. 1, the straddle-type vehicle 1000 includes a small-sized cowl 530 covering a headlamp 520 attached to a handle 510. A fuel tank 540 is arranged on a rear side of a head pipe 101 of the body frame 100 to which the handle 510 is attached. Small-sized side cowls 550 are attached to front side portions of the fuel tank 540.

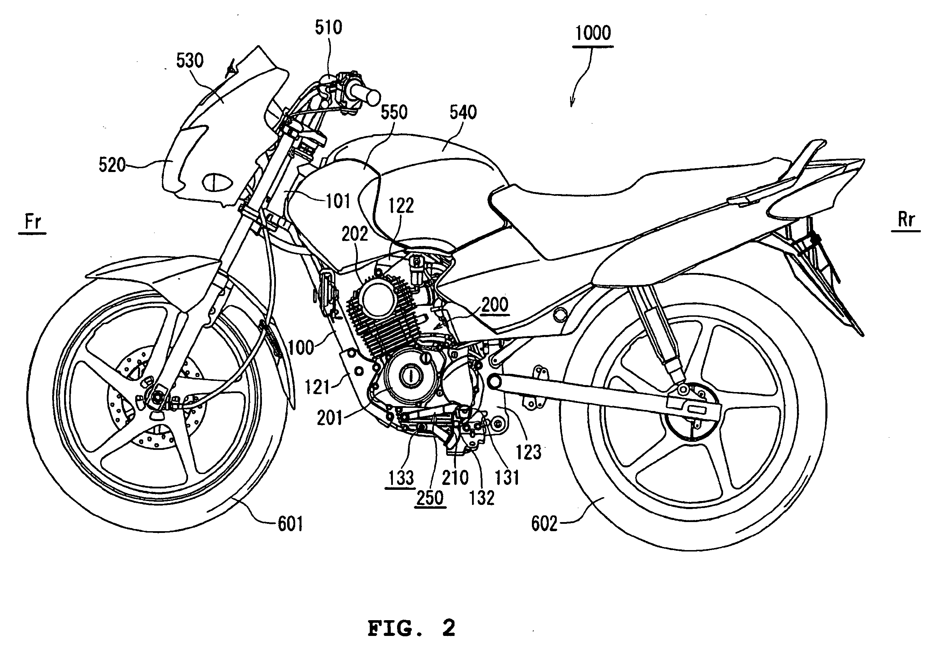

Fig. 2 shows the vehicle 100 with the under cowl 300 removed. As shown in Fig. 2, the engine 200 is arranged below the fuel tank 540. In this embodiment, the engine 200 is attached to the body frame 100 in a space between a front wheel 601 and a rear wheel 602 of the straddle-type vehicle 1000 and below the fuel tank 540. The engine 200 is arranged so that a crankcase 201 is located at a lower position and a cylinder 202 is located at an upper position. An oil reservoir 210, in which oil circulating in the engine 200 is accumulated, is provided below the engine 200. A crankshaft is arranged in the crankcase 201 to be oriented in a vehicle width direction. The engine 200 is attached to the body frame 100 via a plurality of brackets 121, 122, and 123. In this embodiment, a lower portion of the engine 200 is attached to the brackets 121 and 123 and an upper portion of the cylinder 202 of the engine 200 is attached to the bracket 122. Although not shown, a pair of left and right brackets 122 is provided to attach the upper portion of the cylinder 202 to the body frame 100, respectively. In this engine 200, a plurality of fins are provided outside of the cylinder 202. Brackets (footrest brackets 132) to which each footrest 131 is attached are attached to a lower portion of the body frame 100. Further, attachment portions 133 to which the under cowl 300 is attached are provided in the left and right footrest brackets 132, respectively. Moreover, as shown in Fig. 1, an operation pedal 250 performing transmission operation is provided forward of the footrest 131 shown in Fig. 2.

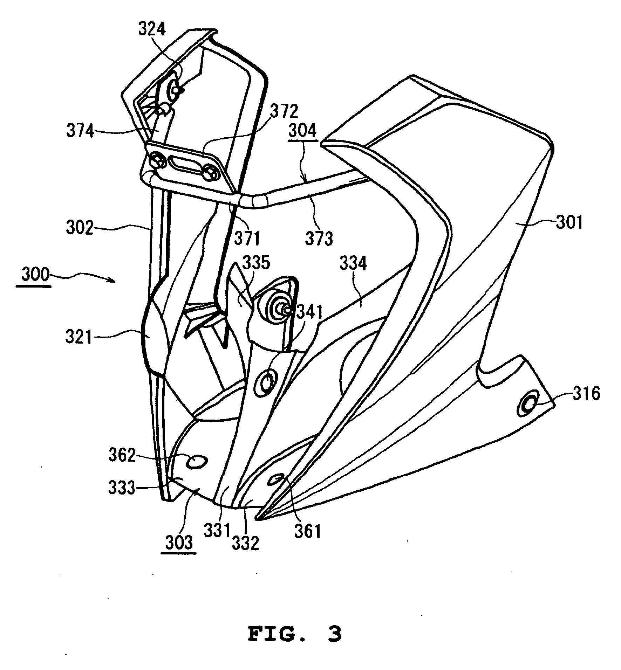

In this embodiment, the under cowl 300 includes a left side member 301, a right side member 302, a front side member 303, and a stay 304, as shown in Fig. 3.

As shown in Fig. 1, the left side member 301 covers up at least a part of a left side of the engine 200. More specifically, in this embodiment, the left side member 301 covers up a left side of a cylinder portion of the engine 200 and a front side portion of a left side of the crankcase 201. The region is formed into a gently curved shape slightly projecting outward. Further, a lower portion of the left side member 301 extends forward of the lower portion of the body frame 100 and has a vertical width which reduces towards the front side, thus being designed to provide a desired appearance.

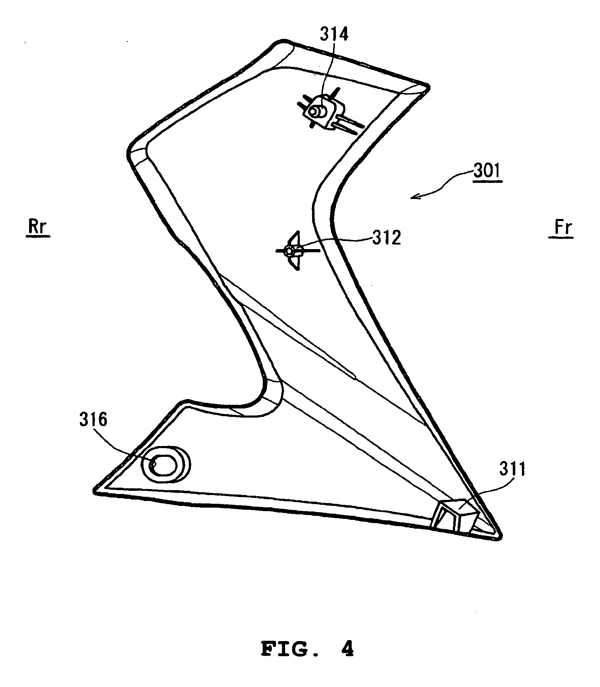

As shown in Fig. 4, connection portions 311 and 312, 314, and 316 provided on the inside of the left side member 301 are connected to a front side member 303, a stay 304 and a left attachment portion 133 (see Fig. 2), respectively. The connection portions 311 and 312, which connect to the front side member 303, are respectively provided on a front side of the lower portion of the left side member 301 and an intermediate region thereof. Although not shown, spring nuts are attached to the connection portions 311 and 312 and screwed with the front side member 301 and the left side member 304, respectively. The connection portions 311 and 312 are reinforced by ribs. The connection portion 314 attached to the stay 304 is provided in an upper portion of the left side member 301. In this embodiment, the connection portion 314 is formed out of a protrusion having a return on a tip end. The connection portion 316 connected to the left attachment portion 133 (see Fig. 2) is provided on a rear side of the lower portion of the left side member 301. In this embodiment, a through-hole for fastening the connection portion 316 to the left attachment portion 133 (see Fig. 2) is formed in the connection portion 316. The through-hole is formed out of a horizontally elongated hole so as to accommodate attachment error. The connection portion 316 is attached to the left attachment portion 133 (see Fig. 2) by a rubber mount using a rubber grommet.

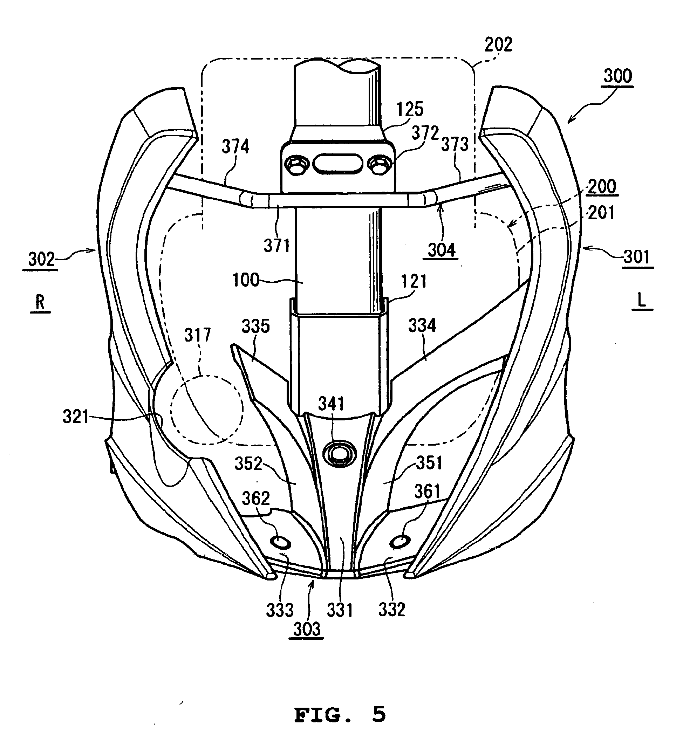

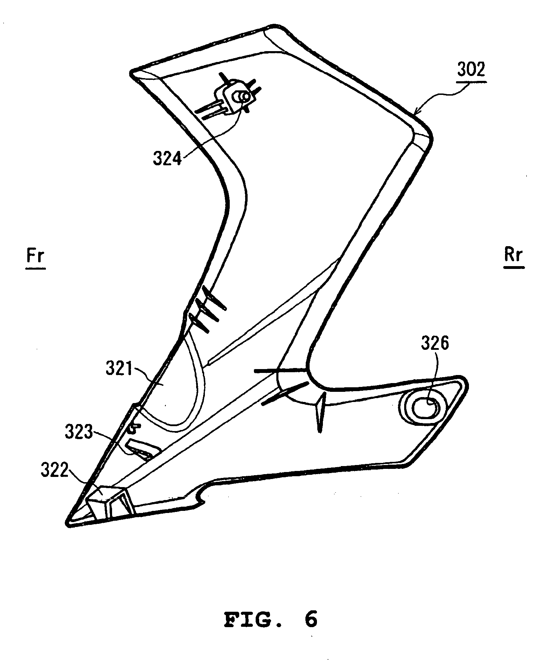

As shown in Fig. 3, the right side member 302 is formed to be substantially bilaterally symmetric with the left side member 301 and covers up at least a part of a right side of the engine 200. In this embodiment, although not shown, the right side member 302 covers up a right side of the cylinder portion of the engine 200 and a front side portion of a right side of the crankcase 201. Furthermore, a lower portion of the right side member 302 extends forward of that of the body frame 100. In this embodiment, as shown in Fig. 5, a region 321 into which an exhaust pipe 317 connected to the engine 200 is inserted is formed inside the right side member 302. As shown in Fig. 6, the region 321 projects outward and forms an internal recess.

As shown in Fig. 6, connection portions 322 and 323, 324, and 326 connected to the front side member 303, the stay 304, and the right attachment portion 133 (see Fig. 2), respectively are provided inside the right side member 302. The connection portions 322 and 323 connected to the front side member 303 are provided on a front side of a lower portion of the right side member 303. A hole for locking a screw that fastens the front side member 303 to the right side member 302 is formed in the connection portion 322 and a periphery of the hole is reinforced by a rib. Further, an engagement piece is provided on the connection portion 323. The connection portion 324 connected to the stay 304 is provided in an upper portion of the right side member 302. In this embodiment, the connection portion 324 is formed out of a protrusion having a return formed on a tip end. The connection portion 326 connected to the right attachment portion 133 (see Fig. 2) is provided on a rear side of the lower portion of the right side member 302. In this embodiment, a through-hole for fastening the connection portion 326 to the right attachment portion 133 (see Fig. 2) is formed in the connection portion 326. The through-hole is similar in configuration to that of the connection portion 316 of the left side member.

In this embodiment, the left side member 301 and the right side member 302 are resin molded parts and molded using a pair of metal molds forming inside and outside, respectively. In other words, each of the respective regions of the left side member 301 and the right side member 302, such as the connection portions and the ribs stated above, is formed into a shape that enables each region to be cut away in a cutting direction of the metal molds. The left side member 301 and the right side member 302 can thereby be molded by the pair of metal molds without a complicated cutting structure.

As shown in Fig. 5, the front side member 303 is attached to the body frame 100, extends transversely on the front side of the body frame 100, and connects the left side member 301 with the right side member 302.

In this embodiment, as shown in Fig. 5, the front side member 303 includes a rib 331, first winged portions 332 and 333, and second winged portions 334 and 335. An attachment portion 341 attached to the body frame 100 is provided on the rib 331. In this embodiment, a fastening hole for fastening the attachment portion 341 to the bracket 121 by a bolt is formed in the attachment portion 341. As shown in Fig. 5, the rib 331 extends forward and downward from a region attached to the body frame 100. Further, left and right side surfaces 351 and 352 of the rib 331 are inclined outwardly to the left and the right in a width direction as they get closer to a rear portion, respectively.

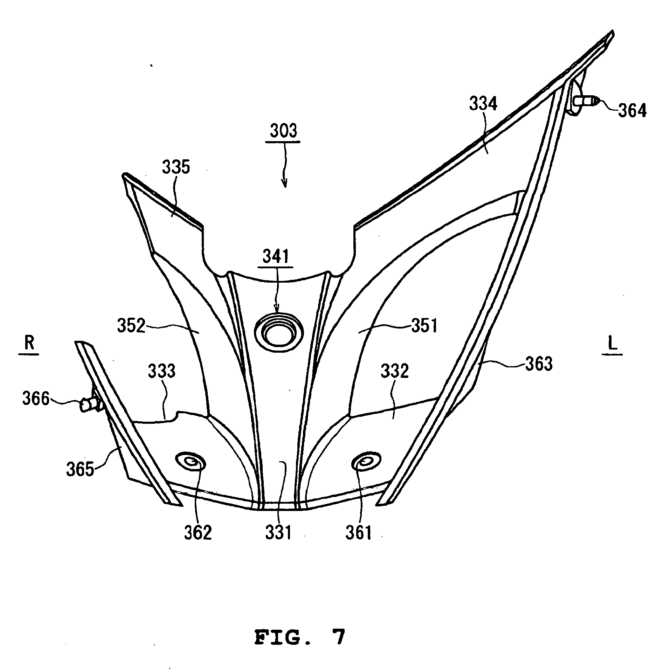

As shown in Fig. 7, the first winged portions 332 and 333 extend leftward and rightward from a tip or lower end of the rib 331 in the width direction, respectively. The second winged portions 334 and 335 extend leftward and rightward from a proximal or upper end of the rib 331, respectively above the first winged portions 332 and 333. Connection portions 361 and 362 connected to the left side member 301 and the right side member 302 are provided in intermediate portions of the left and right first winged portions 332 and 333, respectively. In this embodiment, screw holes for screwing the connection portions 361 and 362 are formed in the connection portions 361 and 362, respectively. Further, a tip end of the left first winged portion 332 is connected to a tip end of the left second winged portion 334 via a wall 363. The wall 363 has a complimentary shape proportional to an inner side surface of the left side member 301 and includes a connection portion 364 connected to the inner side surface of the left side member 301. In this embodiment, the left side member 301 and the front side member 303 are connected with each other by connecting the connection portions 311 and 312 of the left side member 301 shown in Fig. 4 to the connection portions 361 and 364 of the front side member 303 shown in Fig. 7.

Moreover, in this embodiment, as shown in Fig. 7, a wall 365 connected to an inner side surface of the right side member 302 is provided on a tip end of the right first winged portion 333. The wall 365 has a complimentary shape proportional to the inner side surface of the right side member 302 and includes a connection portion 366 connected to the inner side surface of the right side member 302. In this embodiment, the right side member 302 and the front side member 303 are connected with each other by connecting the connection portions 322 and 323 of the right side member 302 shown in Fig. 6 to the connection portions 362 and 366 of the front side member 303 shown in Fig. 7. Furthermore, in this embodiment, the exhaust pipe 317 connected to the engine 200 extends to a front side of the engine 200 and, on the front side of the engine 200, extends rearward while forming a U-shaped curve. As shown in Fig. 5, a gap allowing the exhaust pipe 317 connected to the engine 200 to pass through is formed between the tip end of the right second winged portion 335 and the right side member 302.

In this embodiment, the front side member 303 is a resin molded part and molded by a pair of metal molds that can cut away the front side member 303 longitudinally. In other words, each of the respective regions such as the rib 331, the first winged portions 332 and 333, and the second winged portions 334 and 335 is formed into a shape that enables each region to be cut away in a cutting direction of the metal molds. The front side member 303 can thereby be molded by the pair of metal molds without a complicated cutting structure.

As shown in Fig. 5, the stay 304 is attached to the body frame 100 above the front side member 303 and supports upper portions of the left side member 301 and the right side member 302. In this embodiment, the stay 304 is a rod-like member. A bracket 125 is provided for attaching the stay 304 to a position on the body frame 100 which is above the position at which the front side member 303 is attached to the body frame 100. Attachment pieces 372 are welded to a central portion 371 of the stay 304. The stay 304 is provided on the front side of the body frame 100 and the attachment pieces 372 are attached to the bracket 125 of the body frame 100 by means of bolts. Left and right side portions 373 and 374 of the stay 304 extend obliquely rearward and are connected to the connection portion 314 and 324 in the upper portions of the left side member 301 and the right side member 302 shown in Figs. 4 and 6, respectively. In this embodiment, the connection portions 314 and 324 in the upper portions of the left side member 301 and the right side member 302 are formed out of protrusions each having a return formed on a tip end, respectively. Due to this, although not shown, flanges are formed on both left and right ends of the stay 304 and fitting holes into which the protrusions of the connection portions 314 and 324 are fitted are formed in the flanges, respectively. A rubber ring (bush) is fitted into each of the fitting holes, thereby fitting the protrusion of each of the connection portions 314 and 324 into each fitting hole without slackening. This structure facilitates attaching or detaching of the left side member 301 and the right side member 302 to or from the stay 304.

A structure of the under cowl 300 according to this embodiment has been described so far. The under cowl 300 includes the left side member 301 covering up at least a part of the left side of the engine 200 and the right side member 302 covering up at least a part of the right side of the engine 200. Further, the under cowl 300 includes the front side member 303 attached to the body frame 100, transversely extending on the front side of the body frame 100, and connecting the left side member 301 with the right side member 302. In this embodiment, the front side member 303 connecting the left side member 301 with the right side member 302 is connected to the body frame 100. Due to this, as compared with an instance in which a member corresponding to the front side member is not connected to the body frame 100 as disclosed in the Japanese Examined Patent Publication No. 3-62590, the rigidity of the under cowl 300 can be secured. Furthermore, the under cowl 300 can be attached to the body frame 100 with high accuracy. Moreover, in this embodiment, the under cowl 300 is constituted by the three members, that is, the left side member 301, the right side member 302, and the front side member 303. Due to this, the under cowl 300 can be molded by a pair of simple metal molds without a complicated cutting structure. Further, the under cowl 300 can be coated in a state in which such members as the left side member 301, the right side member 302, the front side member 303, and the stay 304 are detached from the under cowl 300. Therefore, the respective members can be coated easily and effectively in accordance with, for example, a rider's preference.

Furthermore, in this embodiment, the under cowl 300 covers up both side portions of the engine 200 when viewed from a front side of the straddle-type vehicle 1000 as shown in Fig. 5. Due to this, flowing air can be introduced from a front side of the under cowl 300 into the both sides of the engine 200, making it possible to efficiently cool the engine 200.

Moreover, as shown in Fig. 1, the under cowl 300 covers up a front side portion of the engine 200 when viewed from a lateral side of the straddle-type vehicle 1000. Due to this, the flowing air can be efficiently introduced from the front side of the under cowl 300 into the engine 200. The engine 200 can thereby be efficiently cooled. Further, in this embodiment, the under cowl 300 does not cover up a rear side portion of the engine 200 when viewed from the lateral side of the straddle-type vehicle 1000. Due to this, the air surrounding the engine 200 can be promptly released during running. The engine 200 can thereby be efficiently cooled.

Furthermore, in this embodiment, the straddle-type vehicle 1000 includes the stay 304 attached to the body frame 100 above the front side member 303, and the stay 304 supports the upper portions of the left side member 301 and the right side member 302, respectively. Furthermore, in this embodiment, the lower portions 316 and 326 of the left side member 301 and the right side member 302, respectively are attached to the bracket attached to the body frame 100 (to be specific, the attachment portion 133 provided on the footrest bracket 312). This can further improve the rigidity of the under cowl 300 and attachment position accuracy.

Additionally, in this embodiment, the front side member 303 includes the rib 331 extending forward and downward from the region attached to the body frame 100 and the first winged portions 332 and 333 extending leftward and rightward from the tip end of the rib 331 in the width direction. The first winged portions 332 and 333 are connected to the left side member 301 and the right side member 302, respectively. The left and right side surfaces 351 and 352 of the rib 331 are inclined outwardly to the left and the right in a width direction as they get closer to the rear portion, respectively. The front side member 303 also includes the second winged portions 334 and 335 extending leftward and rightward from the proximal end of the rib 331. The left second winged portion 334 is connected to the left side member 301. In this embodiment, shapes of the rib 331, the first winged portions 332 and 333, and the second winged portions 334 and 335 enable the rigidity of the under cowl 300 to be improved, the flowing air to be introduced into the periphery of the engine 200 during running, and the engine 200 to be efficiently cooled.

In this embodiment, the gap allowing the exhaust pipe 317 connected to the engine 200 to pass through is formed in the front side member 303. Due to this, the under cowl 300 can be arranged without disturbing insertion of the exhaust pipe 317.

The straddle-type vehicle according to one embodiment of the present invention has been described so far based on the drawings. However, the present invention is not limited to the above-stated embodiment.

For example, the respective shapes of the left side member, the right side member, the front side member, and the stay, the attachment structure of the under cowl to the body frame, connection structures of the left side member, the right side member, the front side member, and the stay that constitute the under cowl and the like are not limited to the above-stated embodiment but can be variously changed. For example, in the above-stated embodiment, the front side member includes the second winged portions extending leftward and rightward from the rib, respectively and the left second winged portion is connected to the left side member. Alternatively, the right second winged portion may be connected to the right side member. Further, while the front side member includes the second winged portions extending leftward and rightward from the rib, the left and right second winged portions may be connected to the left side member and the right side member, respectively. Furthermore, the present invention is not limited to the above-stated embodiment but can be applied to various types of straddle-type vehicles.

### Description of Reference Numerals

- 100: Body frame
- 101: Head pipe
- 121: to 123, 125 Bracket
- 131: Footrest
- 132: Footrest bracket (bracket)
- 133: Attachment portion
- 200: Engine
- 201: Crankcase
- 202: Cylinder
- 300: Under cowl
- 301: Left side member
- 302: Right side member

- 303: Front side member
- 304: Stay
- 317: Exhaust pipe
- 321: Region into which exhaust pipe is inserted
- 331: Rib
- 332, 333: First winged portion
- 334, 335: Second winged portion
- 351, 352: Left and right side surfaces of rib
- 363: Wall
- 365: Wall
- 510: Handle
- 520: Headlamp
- 530: Cowl
- 540: Fuel tank
- 550: Side cowl
- 601: Front wheel
- 602: Rear wheel
- 1000: Straddle-type vehicle

## Claims

1. A straddle-type vehicle (1000) comprising:
an engine (200);
a body frame (100); and
an under cowl (300) including:
a left side member (301) covering at least a part of the left side of the engine (200);
a right side member (302) covering at least a part of the right side of the engine (200);
a front side member (303) attached to the body frame (100) and extending transversely of the body frame (100) to connect the left side member (301) with the right side member (302); **characterized in that**
the front side member (303) includes:
a rib (331) extending forward and downward from a region attached to the body frame (100);
a first winged portion (332, 333) extending transversely from a tip end of the rib (331) in a width direction, wherein the first winged portion (332, 333) is connected to the left side member (301) and the right side member (302); and
a second winged portion (334, 335) extending transversely from a proximal end portion of the rib (331).

2. The straddle-type vehicle (1000) according to claim 1, wherein the under cowl (300) covers both side portions of the engine (200) when viewed from a front side of the straddle-type vehicle (1000).

3. The straddle-type vehicle (1000) according to claim 1 or 2, wherein the under cowl (300) covers a front side portion of the engine (200) when viewed from a lateral side of the straddle-type vehicle (1000).

4. The straddle-type vehicle (1000) according to claim 1, 2 or 3, comprising a stay (304) attached to the body frame (100) and supporting a portion of the left side member (301) and the right side member (302).

5. The straddle-type vehicle (1000) according to claim 4, wherein the stay (304) is attached to the body frame (100) above the front side member (303).

6. The straddle-type vehicle (1000) according to any praceding claim, wherein a lower portion of each of the left side member (301) and the right side member (302) is attached to a bracket (132) attached to the body frame (100).

7. The straddle-type vehicle (1000) according to any of the preceding claims, wherein left and right side surfaces (351, 352) of the rib (331) incline outwardly to the left and the right in a width direction from the tip end of the rib (331).

8. The straddle-type vehicle (1000) according to any of the preceding claims, wherein the second winged portion (334, 335) is connected to at least one of the left side member (301) and the right side member (302).

9. The straddle-type vehicle (1000) according to any preceding claim, wherein a gap allowing an exhaust pipe (317) connected to the engine (200) to pass through is formed in the front side member (303).

10. The straddle-type vehicle (1000) according to any preceding claim, wherein the front side member (303) extends transversely on a front side of the body frame (100).

11. An under cowl (300) for a straddle-type vehicle (1000) comprising:
a left side member (301) adapted to cover at least a part of a left side of an engine (200);
a right side member (302) adapted to cover at least a part of a right side of an engine (200);
a front side member (303) connecting the left side member (301) with the right side member (302), wherein the front side member (303) is adapted to be attached to a vehicle body frame (100) and to extend transversely of the body frame (100); **characterized in that**
the front side member (303) includes:
a rib (331) extending forward and downward from a region adapted to be attached to the body frame (100);
a first winged portion (332, 333) extending transversely from a tip end of the rib (331) in a width direction, wherein the first winged portion (332, 333) is connected to the left side member (301) and the right side member (302); and
a second winged portion (334, 335) extending transversely from a proximal end portion of the rib (331).

## Patentansprüche

1. Grätschsitz-Fahrzeug (1000), das aufweist:
einen Motor (200);
ein Karosseriegerippe (100); und
einen unteren Windlauf (300), der umfasst:
ein linkes Seitenelement (301), das mindestens einen Teil der linken Seite des Motors (200) bedeckt;
ein rechtes Seitenelement (302), das mindestens einen Teil der rechten Seite des Motors (200) bedeckt;
ein Vorderseitenelement (303), das am Karosseriegerippe (100) befestigt ist und sich quer vom Karosseriegerippe (100) erstreckt, um das linke Seitenelement (301) mit dem rechten Seitenelement (302) zu verbinden; **dadurch gekennzeichnet, dass**
das Vorderseitenelement (303) umfasst:
eine Rippe (331), die sich nach vom und nach unten von einem Bereich erstreckt, befestigt am Karosseriegerippe (100);
einen ersten Kotflügelabschnitt (332, 333), der sich quer von einem oberen Ende der Rippe (331) in einer Breitenrichtung erstreckt, wobei der erste Kotflügelabschnitt (332, 333) mit dem linken Seitenelement (301) und dem rechten Seitenelement (302) verbunden ist; und
einen zweiten Kotflügelabschnitt (334, 335), der sich quer von einem proximalen Endabschnitt der Rippe (331) erstreckt.

2. Grätschsitz-Fahrzeug (1000) nach Anspruch 1, bei dem der untere Windlauf (300) beide Seitenabschnitte des Motors (200) bedeckt, wenn von einer Vorderseite des Grätschsitz-Fahrzeuges (1000) aus betrachtet wird.

3. Grätschsitz-Fahrzeug (1000) nach Anspruch 1 oder 2, bei dem der untere Windlauf (300) einen Vorderseitenabschnitt des Motors (200) bedeckt, wenn von einer lateralen Seite des Grätschsitz-Fahrzeuges (1000) aus betrachtet wird.

4. Grätschsitz-Fahrzeug (1000) nach Anspruch 1, 2 oder 3, das eine Strebe (304) aufweist, die am Karosseriegerippe (100) befestigt ist und einen Abschnitt des linken Seitenelementes (301) und des rechten Seitenelementes (302) trägt.

5. Grätschsitz-Fahrzeug (1000) nach Anspruch 4, bei dem die Strebe (304) am Karosseriegerippe (100) oberhalb des Vorderseitenelementes (303) befestigt ist.

6. Grätschsitz-Fahrzeug (1000) nach einem der vorhergehenden Ansprüche, bei dem ein unterer Abschnitt eines jeden von linkem Seitenelement (301) und rechtem Seitenelement (302) an einer Halterung (132) befestigt ist, die am Karosseriegerippe (100) befestigt ist.

7. Grätschsitz-Fahrzeug (1000) nach einem der vorhergehenden Ansprüche, bei dem sich die linke und rechte Seitenfläche (351, 352) der Rippe (331) nach außen nach links und rechts in einer Breitenrichtung vom oberen Ende der Rippe (331) neigen.

8. Grätschsitz-Fahrzeug (1000) nach einem der vorhergehenden Ansprüche, bei dem der zweite Kotflügelabschnitt (334, 335) mit mindestens einem von linkem Seitenelement (301) und rechtem Seitenelement (302) verbunden ist.

9. Grätschsitz-Fahrzeug (1000) nach einem der vorhergehenden Ansprüche, bei dem ein Spalt im Vorderseitenelement (303) ausgebildet ist, der den Durchgang eines mit dem Motor (200) verbundenen Auspuffrohres (317) gestattet.

10. Grätschsitz-Fahrzeug (1000) nach einem der vorhergehenden Ansprüche, bei dem sich das Vorderseitenelement (303) quer auf einer Vorderseite des Karosseriegerippes (100) erstreckt.

11. Unterer Windlauf (300) für ein Grätschsitz-Fahrzeug (1000), der aufweist:
ein linkes Seitenelement (301), das ausgebildet ist, um mindestens einen Teil einer linken Seite eines Motors (200) zu bedecken;
ein rechtes Seitenelement (302), das ausgebildet ist, um mindestens einen Teil einer rechten Seite eines Motors (200) zu bedecken;
ein Vorderseitenelement (303), das das linke Seitenelement (301) mit dem rechten Seitenelement (302) verbindet, wobei das Vorderseitenelement (303) so ausgebildet ist, dass es an einem Karosseriegerippe (100) eines Fahrzeuges befestigt werden kann und sich quer vom Karosseriegerippe (100) erstreckt; **dadurch gekennzeichnet, dass**
das Vorderseitenelement (303) umfasst:
eine Rippe (331), die sich nach vom und nach unten von einem Bereich erstreckt, ausgebildet, um am Karosseriegerippe (100) befestigt zu werden;
einen ersten Kotflügelabschnitt (332, 333), der sich quer von einem oberen Ende der Rippe (331) in einer Breitenrichtung erstreckt, wobei der erste Kotflügelabschnitt (332, 333) mit dem linken Seitenelement (301) und dem rechten Seitenelement (302) verbunden ist; und
einen zweiten Kotflügelabschnitt (334, 335), der sich quer von einem proximalen Endabschnitt der Rippe (331) erstreckt.

## Revendications

1. Véhicule du type à enfourcher (1000), comprenant :
un moteur (200) ;
un cadre de carrosserie (100) ; et
une partie inférieure d'auvent (300), englobant :
un élément du côté gauche (301), recouvrant au moins une partie du côté gauche du moteur (200) ;
un élément du côté droit (302), recouvrant au moins une partie du côté droit du moteur (200) ;
un élément du côté avant (303), fixé sur le cadre de carrosserie (100) et s'étendant de manière transversale par rapport au cadre de carrosserie (100) pour connecter l'élément du côté gauche (301) à l'élément du côté droit (302) ; **caractérisé en ce que**
l'élément du côté avant (303) englobe :
une nervure (331), s'étendant vers l'avant et vers le bas à partir d'une région fixée sur le cadre de carrosserie (100) ;
une première partie de pare-boue (332, 333), s'étendant de manière transversale à partir d'une extrémité de pointe de la nervure (331), dans une direction de la largeur, la première partie de pare-boue (332, 333) étant connectée à l'élément du côté gauche (301) et à l'élément du côté droit (302) ; et
une deuxième partie de pare-boue (334, 335), s'étendant de manière transversale à partir d'une partie d'extrémité proximale de la nervure (331).

2. Véhicule du type à enfourcher (1000) selon la revendication 1, dans lequel la partie inférieure d'auvent (300) recouvre les deux parties latérales du moteur (200), vue à partir d'un côté avant du véhicule du type à enfourcher (1000).

3. Véhicule du type à enfourcher (1000) selon les revendications 1 ou 2, dans lequel la partie inférieure d'auvent (300) recouvre une partie du côté avant du moteur (200), vue à partir d'un côté latéral du véhicule du type à enfourcher (1000).

4. Véhicule du type à enfourcher (1000) selon les revendications 1, 2 ou 3, comprenant une béquille (304), fixée sur le cadre de carrosserie (100) et supportant une partie de l'élément du côté gauche (301) et de l'élément du côté droit (302).

5. Véhicule du type à enfourcher (1000) selon la revendication 4, dans lequel la béquille (304) est fixée sur le cadre de carrosserie (100) au-dessus de l'élément du côté avant (303).

6. Véhicule du type à enfourcher (1000) selon l'une quelconque des revendications précédentes, dans lequel une partie inférieure de chaque élément, l'élément du côté gauche (301) et l'élément du côté droit (302), est fixée sur une console (132) fixée sur le cadre de carrosserie (100).

7. Véhicule du type à enfourcher (1000) selon l'une quelconque des revendications précédentes, dans lequel les surfaces latérales de gauche et de droite (351, 352) de la nervure (331) sont inclinées vers l'extérieur, vers la gauche et vers la droite, dans une direction de la largeur, à partir de l'extrémité de pointe de la nervure (331).

8. Véhicule du type à enfourcher (1000) selon l'une quelconque des revendications précédentes, dans lequel la deuxième partie de pare-boue (334, 335) est connectée à au moins un élément, l'élément du côté gauche (301) ou l'élément du côté droit (302).

9. Véhicule du type à enfourcher (1000) selon l'une quelconque des revendications précédentes, dans lequel un espace, permettant le passage d'un tuyau d'échappement (317) connecté au moteur (200), est formé dans l'élément du côté avant (303).

10. Véhicule du type à enfourcher (1000) selon l'une quelconque des revendications précédentes, dans lequel l'élément du côté avant (303) s'étend de manière transversale sur un côté avant de la carrosserie (100).

11. Partie inférieure d'auvent (300) pour un véhicule du type à enfourcher (1000), comprenant :
un élément du côté gauche (301), adapté pour recouvrir au moins une partie d'un côté gauche d'un moteur (200) ;
un élément du côté droit (302), adapté pour recouvrir au moins une partie d'un côté droit d'un moteur (200) ;
un élément du côté avant (303), connectant l'élément du côté gauche (301) à l'élément du côté droit (302), l'élément du côté avant (303) étant adapté pour être fixé sur un cadre de carrosserie (100) de véhicule et pour s'étendre de manière transversale par rapport au cadre de carrosserie (100) ; **caractérisé en ce que**
l'élément du côté avant (303) englobe :
une nervure (331), s'étendant vers l'avant et vers le bas à partir d'une région adaptée pour être fixée sur le cadre de carrosserie (100) ;
une première partie de pare-boue (332, 333), s'étendant de manière transversale à partir d'une extrémité de pointe de la nervure (331), dans une direction de la largeur, la première partie de pare-boue (332, 333) étant connectée à l'élément du côté gauche (301) et à l'élément du côté droit (302) ; et
une deuxième partie de pare-boue (334, 335), s'étendant de manière transversale à partir d'une partie d'extrémité proximale de la nervure (331).
